# EUROPEAN PATENT SPECIFICATION

(11) **EP 1 161 031 B1**
(45) Date of publication and mention of the grant of the patent: **26.04.2006**
(21) Application number: 01110754.7
(22) Date of filing: 03.05.2001
(51) Int. Cl.: H04L 12/28, H04L 29/06, H04Q 7/38

(54) **Access point device and authentication method thereof**
Zugangspunkt und Authentifizierungsverfahren dafür
Point d'accès et son procédé d'authentification

(30) Priority: 01.06.2000 JP 2000164519
(43) Date of publication of application: 05.12.2001
(73) Proprietor: SHARP KABUSHIKI KAISHA, Osaka 545-8522 (JP)
(72) Inventor: Kimura, Shinya, Yokohama-shi, Kanagawa 222-0032 (JP)
(74) Representative: Müller - Hoffmann & Partner

(56) References cited:
- EP-A- 1 081 895
- US-A- 5 940 755
- PRASAD A R ET AL: "SECURITY ARCHITECTURE FOR WIRELESS LANS: CORPORATE & PUBLIC ENVIRONMENT" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 1 OF 3. CONF. 51, 15 May 2000 (2000-05-15), pages 283-287, XP000970625 ISBN: 0-7803-5719-1

## Description

### BACKGROUND OF THE INVENTION

### 1. Field of the Invention

The present invention relates to an access point device and an authentication method thereof. More particularly, the invention relates to an access point device and its authentication method which avoid unauthorized access from mobile stations of malicious intruders in a radio-based, wireless LAN system.

### 2. Description of the Prior Art

In recent years, the explosive prevalence of the Internet has been increasing the cases of constructing LANs (Local Area Networks) in office, home, and the like. In view of advanced digital radio communication technologies, the needs for LANs constructed by radio, or so-called wireless LANs, have been growing greatly due to the inconvenience of cable wiring. Furthermore, the availability of the wireless LANs with mobile terminals, typified by notebook PCs, in a mobile environment also contributes to numbers of prevalence expected in the future. Among existing typical technologies for wireless LANs is IEEE 802.11 which is standardized by IEEE (Institute of Electrical and Electronics Engineers). This standardized technology provides definitions from a physical layer to a datalink lower sublayer, or a MAC (Media Access Control) layer, in the OSI model. It includes specifications that allow a substitution of the Ethernet, or wired LAN transmission channels, and also provide a roaming function as a wireless-related additional function.

Now, when a LAN is constructed by the wired Ethernet or the like, establishing connection with the LAN involves physical connection of cables to a hub and the like. This means a very high security level at the datalink level. That is, even if intruders make an unauthorized intrusion into an office or the like in order to connect their terminals to the network, they need to conduct the physical operation of connecting cables, which is extremely difficult to achieve in secrecy due to typical LAN arrangements (of relatively small to medium LANs, in particular). The reason is that in most cases, the LAN users and the hubs, routers, and the like that constitute the LAN are in the same room. On the other hand, in a wireless LAN system, the above-mentioned operation of connecting Ethernet or other cables is replaced with an automatic association procedure. In the above-described existing IEEE-802.11 systems and the like, this association procedure is a procedure in which mobile terminals get recognized of their existence by access points which are connected to a wired backbone network or the like. Then, the completion of this procedure enables data communication. In this procedure, a mobile terminal lying in a finite area covered by an access point performs, in advance of the association, an optional authentication procedure with respect to the access point so as to ensure security at the datalink level.

According to this association procedure, the mobile station issues an association request to the access point, with a service set identifier (SSID) added to the association request message. The access point receiving this message identifies the mobile station by the above-mentioned SSID, and determines whether or not to authorize the association in accordance with a predetermined association authorization rule. If authorizes, the access point sends an association-authorizing response message to the mobile station. If rejects, it sends an association-rejecting response message. Therefore, this association procedure by itself cannot prevent those who try to intrude into the network with evil intent from establishing association easily once they acquire the SSID. In order to prevent this and perform the association procedure as well, the option of executing an authentication procedure is provided. That is, according to the system provided with the option of executing an authentication procedure, the mobile terminal, unless it completes the authentication procedure, cannot establish the association to start data communication. This consequently provides an effective function to avoid unauthorized association from malicious mobile terminals in the above-mentioned finite area, the unauthorized association requiring no physical connecting operations.

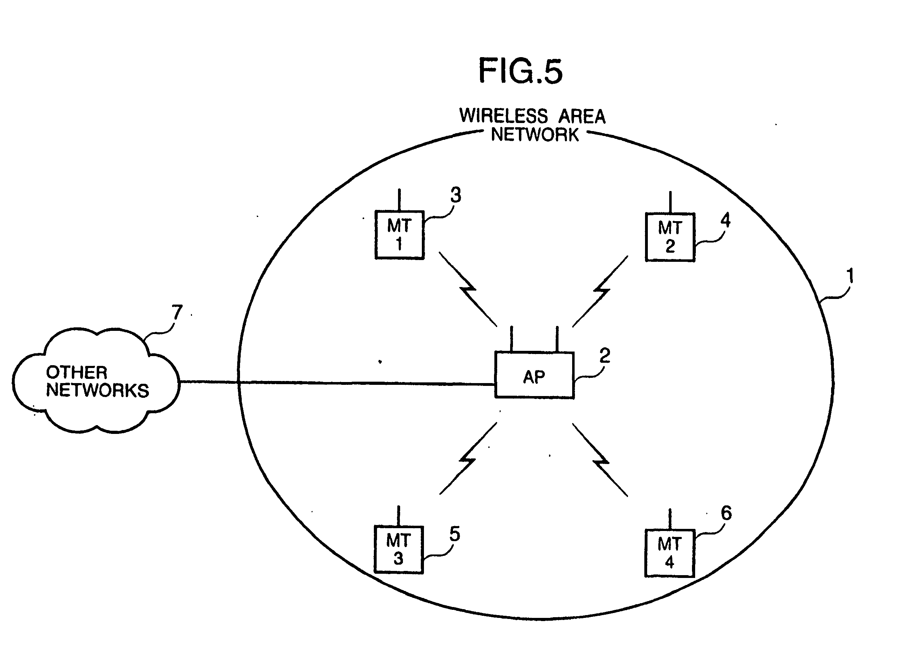

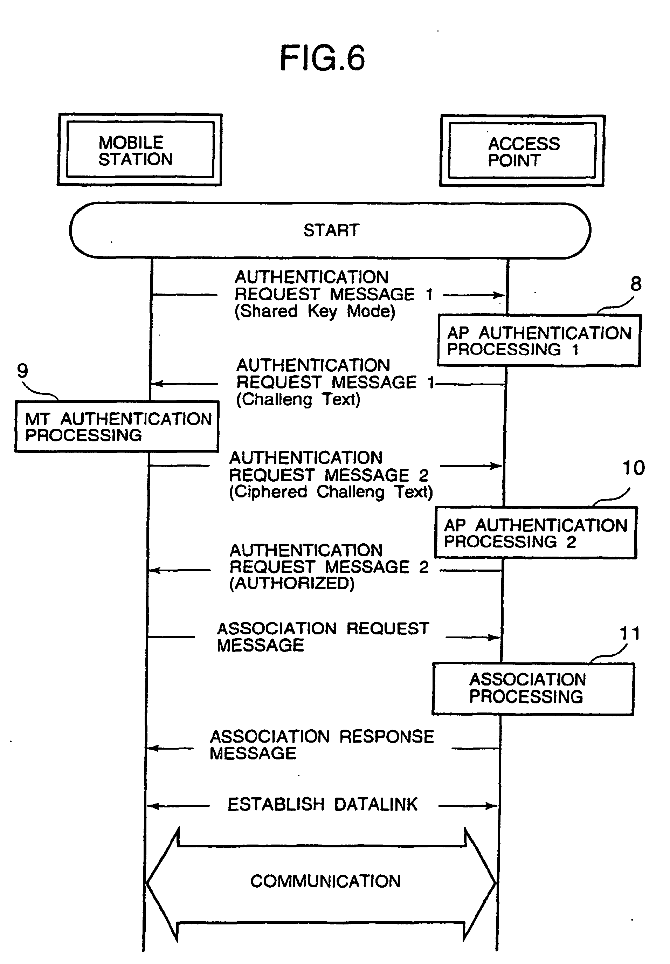

In IEEE 802.11, this authentication procedure is defined as the Shared Key Authentication procedure. Now, this procedure will be described with reference to Figs. 5 and 6.

Fig. 5 is a diagram showing the general configuration of a conventional wireless LAN system. Fig. 6 is a diagram showing the control sequences of conventional authentication and association procedures.

In Fig. 5, the reference numeral 1 represents a wireless area network, 2 an access point AP, 3 a mobile station MT1, 4 a mobile station MT2, 5 a mobile station MT3, 6 a mobile station MT4, and 7 networks other than the wireless area network 1.

The wireless area network 1 includes the access point AP 2 and the mobile stations MT1, MT2, MT3, and MT4. The access point AP 2 is connected to the other networks 7 which are realized by wired transmission channels. The mobile stations MT1-MT4 lie in the finite area covered by the access point AP 2. Fig. 6 shows the sequences for situations where, in the wireless area network 1, a mobile station (for example, MT1) is turned on or otherwise operated to initiate the pre-association authentication procedure with respect to the access point AP 2.

Initially, the mobile station MT1 sends to the access point AP 2 an authentication request message 1 for initiating the authentication procedure by the Shared Key Authentication method. Receiving this message at AP authentication processing 0 (AP authentication processing "1"), the AP 2 makes a numerical operation in accordance with the WEP (Wired Equivalent Privacy)-PRNG (Pseudorandom Number Generator) algorithm by using the Initialization Vector and Secret Key values, which can be determined arbitrarily on each execution of this authentication procedure, as the parameters. The access point AP 2 thereby calculates a 128-octet uniquely-determined Challenge Text value, and sends an authentication response message 1 including this value to the mobile station MT1.

Next, receiving this authentication response message 1 at MT authentication processing 9, the mobile station MT1 ciphers the Challenge Text value included therein, in accordance with the WEP cipher algorithm by using the Shared Secret Data and Initialization Vector as the parameters. The result and the aforementioned Initialization Vector are included into an authentication request message 2, which is returned to the access point AP 2.

Then, receiving this authentication request message 2 at AP authentication processing 10 (AP authentication processing "2"), the access point AP 2 decodes the ciphered Challenge Text value received, based on the Initialization Vector received concurrently and the aforementioned Shared Secret Data known in advance. The resulting value is compared with the original Challenge Text value described above. If identical, the authentication is authorized. If not, the authentication is rejected. The result of this is returned as an authentication response message 2 to the mobile station MT1. Then, if the result is of authorization, the mobile station MT1 receiving this authentication response message 2 can enter the subsequent association procedure. In the cases of rejection, the association procedure cannot be performed due to the failed authentication.

The association processing here is the same as described above. More specifically, the access point AP 2 receiving the SSID (Service Set Identifier) in the association request message from the mobile station MT1 identifies the mobile station by that SSID, and determines whether or not to authorize the association. If authorizes, the access point AP 2 sends to the mobile station MT1 an association response message for authorizing the association. If rejects, an association response message for rejecting the association is sent. Incidentally, this WEP algorithm is defined by the RC4 technology from RSA Data Security Inc.

In short, according to this authentication method, the access point and the mobile stations are previously provided with the same secret key, or Shared Secret Key, to realize the mechanism for the access point to grant authentication/association to particular mobile stations. Here, the mobile stations implement the Shared Secret Key in a form unreadable to general users, so as to avoid a theft (read) by malicious intruders. Meanwhile, since the Key itself is not transmitted over the radio transmission channels, interception is precluded to ensure a certain degree of security level.

Such an authentication method for a conventional access point device retains security on the assumption that the algorithms for authentication and the keys for the authentication would never be stolen by those who try to intrude into the network with evil intent. This assumption, however, is not 100% secured. That is, there is no guarantee that complete duplications of authentic terminals would never be made on the access point by authorized procedures. Moreover, there is an undeniable possibility that the keys stored in user-inaccessible memories might be read out in an unauthorized way by using special equipment. Therefore, if those who maliciously try to intrude into the network through such unauthorized activities successfully establish unauthorized association of their terminals, then they can intrude into the network while remaining hidden physically in the area covered by the access point, without any physical operations such as wired cable connection. In other words, there has been a problem that when a wireless network is constructed within a closed space (office or home), the area covered by the central access point is susceptible to the association from terminals of those who try to intrude into the network with evil intent, which lie outside of the closed section, namely, in blind spots beyond walls or the like.

EP-A-1 081 895 discloses a secure wireless local area network which includes a single-wired network that supports both wired and wireless devices. Access points are in communication with the wireless devices through an air channel for their authenticating. Further, an authentication server is connected to the wired LAN for providing a wireless device's operator with access to the wired LAN after authenticating the corresponding access point and the operator.

Prasad et al.: "Security Architecture For Wireless LANs: Corporate & Public Environment" VTC 2000-Spring. 2000 IEEE 51St. Vehicular Technology Conference Proceedings. Tokyo, Japan, May 15-18, 2000, IEEE Vehicular Technology Conference, New York, NY: IEEE, US, Vol. 1 of 3. Conf. 51,15 May 2000, pages 283 to 287, discloses a security architecture for wireless LANs, wherein RADIUS, a convenient network authentication protocol may be used. In combination with the RADIUS-protocol, a wireless device is a PPP client, an access point is a PPP server and has the role of a RADIUS-client, which is intended to enter into communication with a RADIUS-server.

### SUMMARY OF THE INVENTION

The present invention has been achieved in view of such a problem. It is thus an object of the present invention to provide an access point device and its authentication method which can dramatically improve a wireless LAN system in security level. This object is met by an access point device and an authentication method according to claims 1 and 2.

An access point device according to the present invention is an access point device having an interface function with a network constructed of wired transmission channels and establishing datalink connection with a plurality of mobile stations within the area of a radio LAN. This access point device includes: notification means for notifying a network administrator administering the LAN of the presence of an authentication-requesting mobile station so as to gain the final authorization of an authentication procedure when a mobile station in the area perform the authentication procedure before the initiation of an association procedure; and input means from which the network administrator notified inputs an authentication-authorizing or -rejecting instruction with respect to the authentication-requesting mobile station.

An authentication method for an access point device according to the present invention is an authentication method for an access point device having an interface function with a network constructed of wired transmission channels and establishing datalink connection with a plurality of mobile stations within the area of a radio LAN. This authentication method initiates an association procedure after authentication is completed of the mobile stations by performing: a first step in which the mobile stations and the access point device initiate a predetermined authentication procedure in response to an authentication request from the mobile stations to the access point device; a second step in which the access point device, in authorizing the authentication of the mobile stations by the authentication procedure, notifies a network administrator administering the LAN of the final authorization of the authentication procedure and starts an authentication wait timer before the access point device returns an authentication response message, or the final message in the authentication procedure, to the mobile stations, the authentication wait timer being set at a maximum wait time up to the final authentication; a third step in which the network administrator provides a final authentication-authorizing or - rejecting instruction to the access point device before the timeout of the authentication wait timer; a fourth step in which the access point device, when the network administrator provides a final authentication-authorizing instruction before the timeout of the authentication wait timer, returns the authentication response message to the mobile stations as authentication authorization; and a fifth step in which the mobile stations receiving the authentication response message start the association procedure.

In the third step, the authentication response message may be returned to the mobile stations as authentication rejection when the network administrator provides the authentication-rejecting instruction to the access point device.

Besides, in the third step, the authentication response message may be returned to the mobile stations as authentication rejection when the authentication wait timer goes time-out before the network administrator provides the authentication-rejecting or -authorizing instruction to the access point device.

Moreover, in a preferred concrete mode, the authentication procedure may be the Shared Key Authentication procedure defined in IEEE 802.11.

### BRIEF DESCRIPTION OF THE DRAWINGS

Fig. 1 is a diagram showing the general configuration of an access point device according to an embodiment of the present invention;
Fig. 2 is a diagram showing the control sequence of the authentication procedure for situations where the access point device of the present embodiment authorizes authentication;
Fig. 3 is a diagram showing the control sequence of the authentication procedure for situations where the access point device of the present embodiment rejects authentication or goes time-out;
Fig. 4 is a flowchart showing the access point authentication processing by the access point device of the present embodiment;
Fig. 5 is a diagram showing the general configuration of a conventional wireless LAN system; and
Fig. 6 is a diagram showing the control sequences of the authentication and association procedures in the conventional wireless LAN system.

### DETAILED DESCRIPTION OF THE PREFERRED EMBODIMENT

Hereinafter, a preferred embodiment of the access point device and its authentication method according to the present invention will be described in detail with reference to the accompanying drawings.

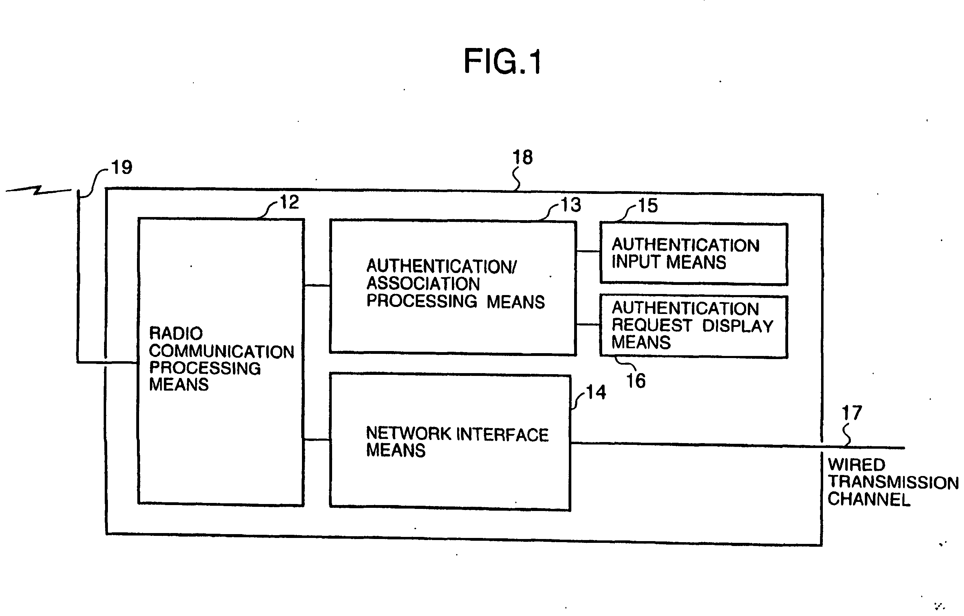

Fig. 1 is a diagram showing the general configuration of the access point device according to the embodiment of the present invention.

The access point device 18 in the present embodiment is installed in place of the access point AP 2 in Fig. 5 described above. More specifically, in Fig. 5 described above, the wireless area network 1 includes the access point AP 2 connected to the other networks 7 realized by wired transmission channels, and the mobile stations MT1, MT2, MT3, and MT4 lying in the finite area covered by the AP 2. In the wireless area network 1, the access point AP 2 is replaced with the access point device 18 shown in Fig. 1.

In Fig. 1, the access point device 18 includes radio communication processing means 12, an antenna 19, network interface means 14, authentication/association processing means 13, authentication request display means 16 (notification means), and authentication input means 15 (input means) so as to realize the radio connection with the plurality of mobile stations MT1, MT2, MT3, and MT4. The radio communication processing means 12 consist of a radio modulation and demodulation unit, a baseband signal processing unit, and a datalink control unit. The antenna 19 is intended for radio transmission and reception, and is connected to the radio communication processing means 12. The network interface means 14 establish datalink connection with the other networks 7 through an arbitrary wired transmission channel 17, and realize the function of interfacing the data to be transmitted and received by the radio communication processing means 12. The authentication/association processing means 13 realize the function of performing the association and authentication procedures for the radio communication processing means 12 to establish the datalink with the plurality of mobile stations. The authentication/association processing means 13 also realize the function of communicating control messages with the radio communication processing means 12, the control messages to be exchanged with the mobile stations MT1, MT2, MT3, and MT4. The authentication request display means 16 provide notification to a user who administers the wireless area network 1, before the authentication/association processing means 13 performing the authentication processing finally grant authorization and send an authentication-authorizing message to a mobile station to be authorized of authentication. The authentication request display means 16 thereby realize the function of notifying the user of the presence of an authorization-requesting mobile station, through a display device, a loudspeaker, or the like. The authentication input means 15 realize the function of accepting button or other physical human inputs so as to notify the authentication/association processing means 13 whether or not the user who administers the wireless area network 1 grants authorization or rejection after the presence of the authentication-requesting mobile station is notified by the authentication request display means 16.

Hereinafter, the operations of the authentication method for the access point device configured as described above will be described.

Here, description will be given of the sequences for the case where a mobile station is turned on or otherwise operated to perform the authentication and association procedures so that the datalink connection with the access point device 18 is established, and for the case where the authentication is rejected.

Assume here that the mobile station MT1 in Fig. 5 described above is the mobile station to perform the authentication processing, and the mobile stations MT2, MT3, and MT4 have already completed the association with the access point device 18 for established datalink.

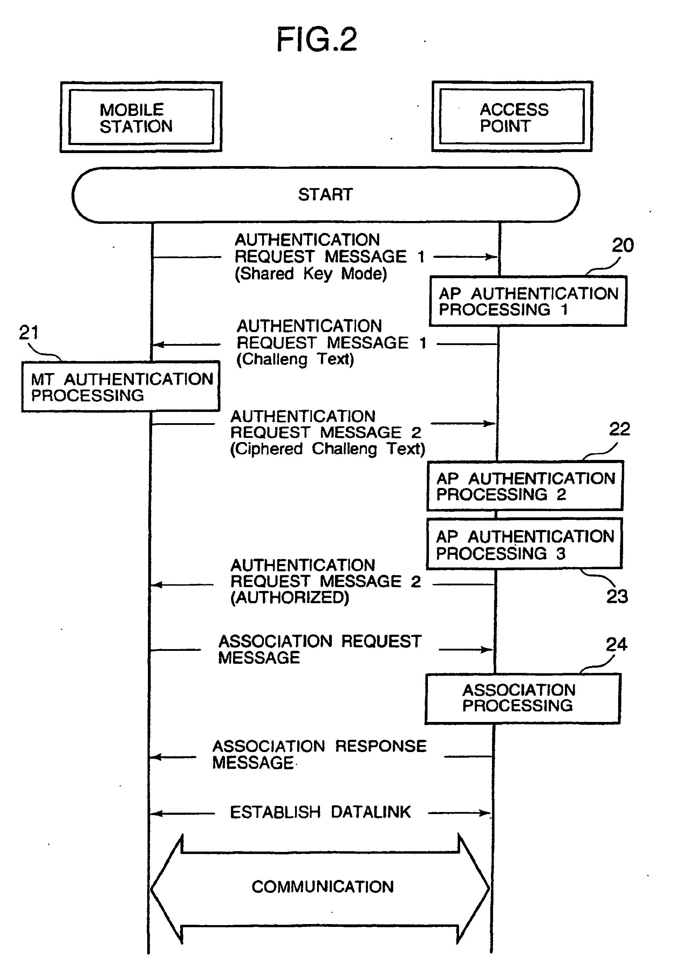

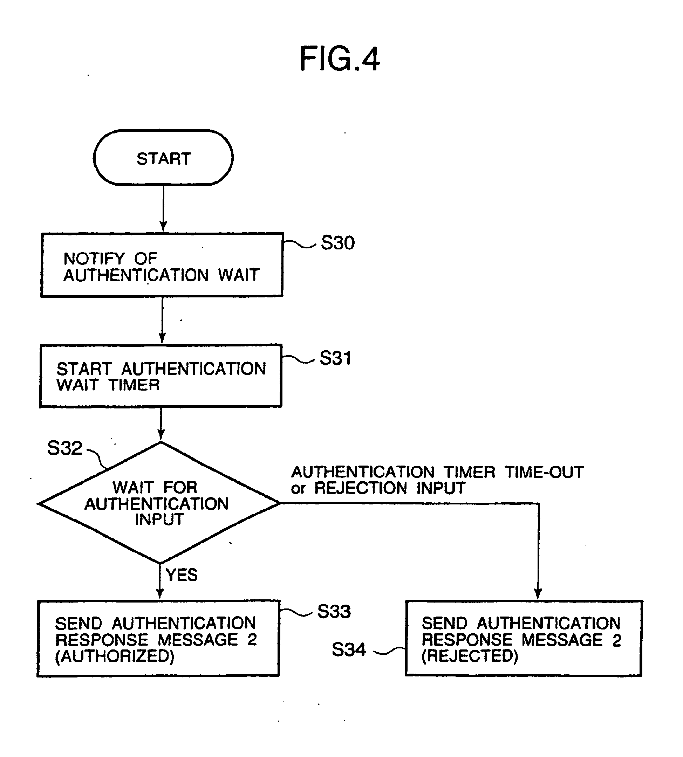

Initially, referring to Figs. 2 and 4, description will be given of the case where the mobile station MT1 performs the authentication procedure and the network-administering user authorizes the authentication, followed by the association procedure to establish datalink with the access point device 18.

Fig. 2 is a diagram showing the control sequence of the authentication procedure in the case of authorized authentication.

The mobile station MT1 is turned on or otherwise operated to send to the access point device 18 an authentication request message 1 for initiating the authentication procedure by the Shared Key Authentication method.

In the access point device 18, the authentication/association processing means 13 receive this message through the radio communication processing means 12. At AP authentication processing 1 (see the numeral 20 in Fig. 2), the authentication/association processing means 13 make a numerical operation in accordance with the WEP (Wired Equivalent Privacy)-PRNG (Pseudorandom Number Generator) algorithm by using the Initialization Vector and Secret Key values as the parameters. Here, the Initialization Vector and Secret Key values can be arbitrarily determined on each execution of this authentication procedure. The authentication/association processing means 13 thereby obtain a 128-octet uniquely-determined Challenge Text value, and send an authentication response message 1 including this value to the mobile station MT1 through the radio communication processing means 12.

Next, at MT authentication processing 21, the mobile station MT1 receiving this authentication response message 1 ciphers the included Challenge Text value in accordance with the WEP cipher algorithm by using the Shared Secret Data and Initialization Vector as the parameters. The resulting value and the Initialization Vector are included into an authentication request message 2, which is returned to the access point device 18. Moreover, in the access point device 18, the authentication/association processing means 13 receive this message through the radio communication processing means 12. At AP authentication processing 2(see the numeral 22 in Fig. 2), the authentication/association processing means 13 decoded the received ciphered Challenge Text value based on the Initialization Vector which is received concurrently and the Shared Secret Data which is known in advance. The result is compared with the original Challenge Text value stated before, and if identical, the authentication/association processing means 13 execute the procedure of AP authentication processing 3 (see the numeral 23 in Fig. 2). The steps S30-33 in the flow of Fig. 4 show this procedure.

Fig. 4 is a flowchart showing the access point authentication processing described above.

In this procedure, the authentication/association processing means 13 in the access point device 18 initially notify the authentication request display means 16 of authentication wait (step S30). At the same time, the authentication/association processing means 13 start an authentication wait timer set at an arbitrary time (step 31), entering a wait for authentication input (step S32). Meanwhile, the authentication request display means 16 informed of the authentication wait immediately notify the network-administering user of the presence of an authentication-requesting mobile station, through a display device, a loudspeaker, or the like.

Here, the authentication/association processing means 13, if receive a notification from the authentication input means 15 of an authentication-authorizing input made by the network-administering user inputting an authentication authorization before the timeout of the authentication wait timer, send an authentication response message 2 indicating the authorized authentication to the mobile station MT1 through the radio communication processing means 12 (step S33).

Returning to Fig. 2, the mobile station MT1 having received this authentication response message 2, since the result is of authorization, enters the subsequent association procedure to send an association request message to the access point device 18.

Here, in the access point device 18, the authentication/association processing means 13 receive this message through the radio communication processing means 12. Then, at the association processing (see the numeral 24 in Fig. 2), the authentication/association processing means 13 identify the mobile station MT1 by the SSID (Service Set Identifier) in the association request message, and determine whether or not to authorize the association in accordance with a predetermined association authorization rule. If authorize, the authentication/association processing means 13 send an association response message that indicates the authorized association to the mobile station MT1 through the radio communication processing means 12. Reception of this association response message by the mobile station MT1 establishes the datalink between the mobile station MT1 and the access point device 18, allowing data communication thereafter.

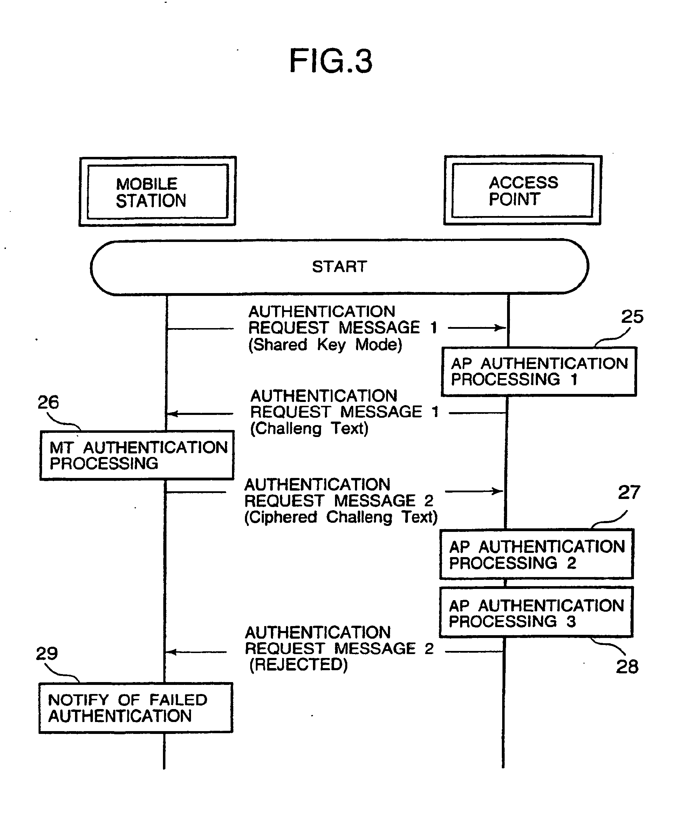

Next, referring to Figs. 3 and 4, description will be given of the case where authentication is rejected of the mobile terminal MT1 by the network-administering user in the authentication procedure, and the case where the authentication wait timer goes time-out to reject the authentication automatically.

Fig. 3 is a diagram showing the control sequence of the authentication procedure for rejected authentication/timeout.

In Fig. 3, the mobile station MT1 is turned on or otherwise operated to send to the access point device 18 an authentication request message 1 for initiating the authentication procedure by the Shared Key Authentication method.

In the access point device 18, the authentication/association processing means 13 receive this message through the radio communication processing means 12. Then, at the AP authentication processing 1 (see the numeral 25 in Fig. 3), the authentication/association processing means 13 performs a numerical operation in accordance with the WEP (Wired Equivalent Privacy)-PRNG (Pseudorandom Number Generator) algorithm by using the Initialization Vector and Secret Key values, which can be arbitrarily determined upon each execution of this authentication procedure, as the parameters. The authentication/association processing means 13 thereby calculate a 128-octet uniquely-determined Challenge Text value, and send the authentication response message 1 including this value to the mobile station MT1 through the radio communication processing means 12.

Then, at the MT authentication processing (see the numeral 26 in Fig. 3), the mobile station MT1 receives this authentication response message 1, and ciphers the Challenge Text value included therein in accordance with the WEP cipher algorithm, with the Shared Secret Data and Initialization Vector as the parameters. The resulting value and the Initialization Vector are included into an authentication request message 2, which is returned to the access point device 18. Besides, in the access point device 18, the authentication/association processing means 13 receive this message through the radio communication processing means 12. At the AP authentication processing 2 (see the numeral 27 in Fig. 3), the authentication/association processing means 13 decode the ciphered Challenge Text value received, based on the Initialization Vector received concurrently and the Shared Secret Data known in advance. The result is compared with the original Challenge Text value stated before, and if identical, the authentication/association processing means 13 execute the procedure of the AP authentication processing 3 (see the numeral 28 in Fig. 3). This procedure is shown as the steps S30-S32, and S34 of the flow in Fig. 4.

In this procedure, the authentication/association processing means 13 in the access point device 18 initially notify the authentication request display means 16 of an authentication wait (step S30). At the same time, the authentication/association processing means 13 start the authentication wait timer set at an arbitrary time (step S31), entering a wait for authentication input (step 32). Meanwhile, the authentication request display means 16 informed of the authentication wait immediately notify the network-administering user of the presence of an authentication-requesting mobile station, through a display device, a loudspeaker, or the like.

Here, the authentication/association processing means 13, if receive a notification from the authentication input means 15 of an authentication-rejecting input made by the network-administering user inputting an authentication rejection before the timeout of the authentication wait timer, send an authentication response message 2 that indicates the authentication rejection to the mobile station MT1 through the radio communication processing means 12 (step S34). Similarly, when the authentication wait timer goes time-out during the authentication input wait (step S32), the authentication/association processing means 13 send the authentication response message 2 that indicates the authentication rejection to the mobile station MT1 through the radio communication processing means 12 (step 34).

Returning to Fig. 3, the mobile station MT1 having received this authentication response message 2 cannot enter the subsequent association procedure since the result is of rejection. If necessary, the mobile station MT1 notifies its user of the failed authentication (see the numeral 29 in Fig. 3). Thus, in this case, the mobile station MT1 is incapable of data communication.

Incidentally, the WEP algorithm mentioned here is defined in the RC4 technology by RSA Data Security Inc. Besides, the association processing (see the numeral 24 in Fig. 2) is identical to the association procedure defined in IEEE 802.11.

Moreover, the arbitrary time set the authentication wait timer is set at can be arbitrarily determined by the network-administering user, as a value appropriate in terms of the time that is required from the network-administering user recognizing the presence of an authentication-requesting mobile station through the authentication request display means to the user inputting an authorization through the authentication input means to authorize the mobile station.

As has been described above, in the present embodiment, the access point device 18 includes the authentication request display means 16 and the authentication input means 15. When a mobile station in the area performs the authentication procedure before the initiation of the association procedure, the authentication request display means 16 make a notification of the authentication-requesting mobile station in the area so that the access point device 18 obtains the final authorization of the authentication procedure from the LAN-administering user. The network administrator notified provides an authentication-authorizing or -rejecting instruction to the authentication-requesting mobile station through the authentication input means 15. In the pre-association authentication procedure of a mobile station on a wireless LAN system which is physically invisible and therefore subject to attacks from network intruders with evil intent, the access point device 18 allows the network-administering user to see who is making the association before granting authorization, instead of the automatic authorization by the access point. This means a significant improvement in security level.

Moreover, in a wireless LAN system that implements the Shared Key Authentication procedures defined as an option in IEEE 802.11, this authentication procedure can be put into operation with the additional implementation of the access point device alone. No modification is required of the mobile station devices.

As has been described in detail, according to the present invention, a wireless LAN system can be dramatically improved in security level while mobile station devices can be implemented without any modifications.

## Claims

1. An access point device (18) having an interface function with a network constructed of wired transmission channels and establishing data link connection with a plurality of mobile stations within the area of a radio LAN, said device being **characterized by**
notification means (16) for notifying a network user administering said radio LAN of the presence of an authentication-requesting mobile station so as to gain the final authorization of an authentication procedure when a mobile station in the area perform said authentication procedure before the initiation of an association procedure; and
input means (15) from which said network user notified inputs an authentication-authorizing or -rejecting instruction with respect to said authentication-requesting mobile station in response to a notification of the presence of the authentication-requesting mobile station via said notification means.

2. An authentication method for an access point device having an interface function with a network constructed of wired transmission channels and establishing data link connection with a plurality of mobile stations within the area of a radio LAN, said method being **characterized by**
a step of notifying a network user administering said radio LAN of the presence of an authentication-requesting mobile station so as to gain the final authorization of an authentication procedure when a mobile station in the area perform said authentication procedure before the initiation of an association procedure; and
a step of said network user notified inputting an authentication-authorizing or -rejecting instruction with respect to said authentication-requesting mobile station in response to a notification of the presence of the authentication-requesting mobile station via said step for notifying.

3. The authentication method for an access point device according to claim 2, wherein an authentication response message is returned to said mobile stations as authentication rejection when said network user provides the authentication-rejecting instruction to said access point device.

4. The authentication method for an access point device according to claim 2, wherein an authentication response message is returned to said mobile stations as authentication rejection when an authentication weight timer goes time-out before said network user provides the authentication-rejecting or -authorizing instruction to said access point device.

5. The authentication method for an access point device according to any one of claims 2 to 4, wherein said authentication procedure is the shared key authentication procedure defined in IEEE 802.11.

## Patentansprüche

1. Access-Point-Vorrichtung (18), welche eine Schnittstellenfunktion mit einem aus verdrahteten Übertragungskanälen aufgebauten Netzwerk hat und eine Daten-Link-Verbindung mit einer Mehrzahl von mobilen Stationen innerhalb des Gebiets eines Funk-LAN einrichtet, wobei die Vorrichtung **gekennzeichnet ist durch**:
Benachrichtigungsmittel (16) zum Benachrichtigen eines das Funk-LAN verwaltenden Netzwerknutzers von der Gegenwart einer die Authentifikation-anfragenden mobilen Station, um die Endauthorisierung einer Authentifikationsprozedur zu erlangen, wenn eine mobile Station in dem Gebiet die Authentifikationsprozedur vor der Initiierung einer Assoziationsprozedur durchführt; und
Eingabemittel (15), **durch** welches der benachrichtigte Netzwerknutzer eine Authentifikation-authorisierende oder -rückweisende Anweisung in Bezug auf die Authentifikation-anfragende mobile Station in Antwort auf eine Benachrichtigung über das Benachrichtigungsmittel von der Gegenwart der Authentifikation-anfragenden mobilen Station eingibt.

2. Authentifikationsverfahren für eine Access-Point-Vorrichtung, welche eine Schnittstellenfunktion mit einem aus verdrahteten Übertragungskanälen aufgebauten Netzwerk hat und eine Daten-Link-Verbindung mit einer Mehrzahl von mobilen Stationen innerhalb des Gebiets eines Funk-LAN einrichtet, wobei das Verfahren **gekennzeichnet ist durch**:
einen Schritt, bei dem ein das Funk-LAN verwaltender Netzwerknutzer von der Gegenwart einer die Authentifikation-anfragenden mobilen Station benachrichtigt wird, um die Endauthorisierung einer Authentifikationsprozedur zu erlangen, wenn eine mobile Station in dem Gebiet die Authentifikationsprozedur vor der Initiierung einer Assoziationsprozedur durchführt; und
einen Schritt, bei dem der benachrichtigte Netzwerknutzer eine Authentifikation-authorisierende oder -rückweisende Anweisung in Bezug auf die Authentifikation-anfragende mobile Station in Antwort auf eine Benachrichtigung über das Benachrichtigungsmittel von der Gegenwart der Authentifikation-anfragenden mobilen Station eingibt.

3. Authentifikationsverfahren für eine Access-Point-Vorrichtung nach Anspruch 2, bei welchem eine Authentifikationsantwortnachricht an die mobilen Stationen als Authentifikationszurückweisung zurückgegeben wird, wenn der Netzwerknutzer die Authentifikation-zurückweisende Anweisung der Access-Point-Vorrichtung liefert.

4. Authentifikationsverfahren für eine Access-Point-Vorrichtung nach Anspruch 2, bei welchem eine Authentifikationsantwortnachricht an die mobilen Stationen als Authentifikationszurückweisung zurückgegeben wird, wenn ein Authentifikationsgewichtungstaktgeber abläuft bevor das Netzwerknutzer die Authentifikation-zurückweisende oder -authorisierende Anweisung an die Access-Point-Vorrichtung liefert.

5. Authentifikationsverfahren für eine Access-Point-Vorrichtung nach einem der Ansprüche 2 bis 4, bei welchem die Authentifikationsprozedur die in IEEE 802.11 definerte Shared Key Authentifikationsprozedur ist.

## Revendications

1. Dispositif de point d'accès (18) ayant une fonction d'interface avec un réseau construit de canaux de transmission câblés et établissant une connexion de liaison de données avec une pluralité de stations mobiles dans la zone d'un réseau LAN radio, ledit dispositif étant
**caractérisé par** :
un moyen de notification (16) destiné à notifier à un utilisateur réseau administrant ledit réseau LAN radio la présence d'une station mobile demandant une authentification de manière à obtenir l'autorisation finale d'une procédure d'authentification lorsqu'une station mobile dans la zone effectue ladite procédure d'authentification avant le lancement d'une procédure d'association ; et
un moyen d'entrée (15) à partir duquel ledit utilisateur réseau notifié entre un ordre d'autorisation ou de refus d'authentification par rapport à ladite station mobile demandant une authentification en réponse à une notification de la présence de la station mobile demandant une authentification via ledit moyen de notification.

2. Procédé d'authentification pour un dispositif de point d'accès ayant une fonction d'interface avec un réseau construit de canaux de transmission câblés et établissant une connexion de liaison de données avec une pluralité de stations mobiles dans la zone d'un réseau LAN radio, ledit procédé étant **caractérisé par** :
une étape consistant à notifier à un utilisateur réseau administrant ledit réseau LAN radio la présence d'une station mobile demandant une authentification de manière à obtenir l'autorisation finale d'une procédure d'authentification lorsqu'une station mobile dans la zone effectue ladite procédure d'authentification avant le lancement d'une procédure d'association ; et
une étape dans laquelle ledit utilisateur réseau notifié entre un ordre d'autorisation ou de refus d'authentification par rapport à ladite station mobile demandant une authentification en réponse à une notification de la présence de la station mobile demandant une authentification via ladite étape de notification.

3. Procédé d'authentification pour un dispositif de point d'accès selon la revendication 2, dans lequel un message de réponse d'authentification est renvoyé auxdites stations mobiles en tant que refus d'authentification lorsque ledit utilisateur réseau envoie l'ordre de refus d'authentification audit dispositif de point d'accès.

4. Procédé d'authentification pour un dispositif de point d'accès selon la revendication 2, dans lequel un message de réponse d'authentification est renvoyé auxdites stations mobiles en tant que refus d'authentification lorsqu'un programmateur de pondération d'authentification dépasse le temps avant que ledit utilisateur réseau n'envoie l'ordre de refus ou d'autorisation d'authentification audit dispositif de point d'accès.

5. Procédé d'authentification pour un dispositif de point d'accès selon l'une quelconque des revendications 2 à 4, dans lequel ladite procédure d'authentification est la procédure d'authentification à clé partagée définie dans IEEE 802.11.
